# EUROPEAN PATENT APPLICATION

(11) **EP 2 369 220 A1**
(43) Date of publication of application: **28.09.2011**
(21) Application number: 11158151.8
(22) Date of filing: 14.03.2011
(51) Int. Cl.: F16P 3/02, A46D 3/00

(54) **Machine for the manufacture of brooms, brushes and the like**

(30) Priority: 23.03.2010 IT MO20100082
(71) Applicant: Borghi S.P.A., 41013 Castelfranco Emilia, località Cavazzona (MO) (IT)
(72) Inventor: Ferrari, Enzo, 41013 Castelfranco Emilia (MO) (IT)
(74) Representative: Brunacci, Marco

(57) **Abstract**

The machine (1) for the manufacture of brooms, brushes and the like comprises at least a workstation (2, 3) arranged resting on a supporting surface (S), at least a protection element (4) positioned in correspondence to the workstation (2, 3) and which defines at least an internal part (4a) turned towards the workstation itself and at least an external part (4b) accessible by an operator, where the protection element (4) comprises at least a lower area (5) arranged in proximity of the supporting surface (S) and inclined in such a way as to converge towards the workstation (2, 3) moving closer to the supporting surface (S) for allowing the operator to accommodate at least partially his/her lower limbs in the space defined below the lower area itself and comprises at least a through opening (7) defined in correspondence to the workstation (2, 3) and suitable for allowing the operator to access the workstation itself.

## Description

The present invention relates to a machine for the manufacture of brooms, brushes and the like.

The machines of known type for the manufacture of brooms, brushes and the like generally comprise a workstation which an operator has to access during normal machine operation to make sure work is proceeding correctly and/or to interact with the machine itself during its operation.

For example, the machines for the manufacture of brooms, brushes and, more in general, objects comprising a supporting element having a plurality of bristles, envisage at least a workstation to which an operator must have access to insert one or more supporting elements without bristles and remove those already machined and therefore complete with bristles.

In the same way, such machines generally have at least another workstation requiring operator intervention for the insertion of the bristles in the machine itself, ready to be subsequently fitted in an automatic way to the respective support.

Because the carrying out of such operations implies a necessary interaction between the operator and the machine, the safety regulations envisage that on such machines protection elements be fitted suitable for ensuring a distance between the operator's body and the workstations big enough to prevent accidents occurring that could cause physical harm to the operator him/herself. These protection elements are therefore arranged outside the workstations and are composed of a series of vertical panels which define a sort of barrier arranged at a predefined distance from the moving parts, such in any case as to allow access to the machine for maintenance or cleaning operations, obviously with the workstations in stop and safety conditions.

The elements of known type however have a number of drawbacks and are susceptible to a number of improvements,

A first drawback derives from the fact that, as currently conceived, the known protection elements do not allow the operator to intervene in a convenient and easy way on the workstation, in particular in the case of a machine for the manufacture of brooms, brushes and the like, where continuous intervention on the workstations is required on the part of the operator during the course of an entire workday.

The conformation of the protection elements of known type, in fact, obliges the operator to perform the various operations from a not very comfortable position, inasmuch as the torso is forced to remain too far away from the workstation intervention area, with consequent forced extension and bending of the back to allow the operator's arms and hands to reach the intervention area itself. Inevitably, the work position taken up by the operator and defined by the machine tool protection elements tires the operator to some extent and, with the passing of time, can result in ailments affecting to the back, the cervical vertebra, etc.

Some machine tools of known type having protection elements are described by EP 0413954 and by DE 8412399.

More in particular, even though EP 0413954 and DE 8412399 do not relate to machines for the manufacture of brushes, brooms and the like, they describe protection elements with an outer profile which, in its vertical extension, has a plurality of areas with a different inclination the one to the other.

These protection elements, shaped this way, allow the operator to more easily approach the machine to check the carrying out of the various operating phases. Furthermore, the protection elements described by EP 0413954 and by DIE 8412399 have, on their outer surface, at least a window or the like, delimited by a glass or in any case by a transparent material, which allows the operator to observe the operation of the tools from outside while at the same time maintaining a separation barrier with the tools themselves.

These machines then have special opening doors, comprising the window mentioned above, to allow the operator to access the work areas. These access doors are connected to a safety device which interrupts the operation of the tools as soon as it detects the opening of the door itself, in order to provide safe access for the operator and thus prevent accidents occurring.

The machine tools described by EP 0413954 and by DE 8412399 do however have a number of drawbacks.

The protection elements of such machines do not in fact allow the operator to intervene on the machine during the operation of same in an easy and fast way. To carry out any job on the machines described by EP 0413954 and by DE 8412399 in fact, the relevant access door must be opened, causing the interruption of the machine operating cycle.

The protection elements described in these documents cannot therefore be used in the machines for the manufacture of brooms, brushes and the like, where continuous intervention is required on the part of the operator during machine operation.

Another drawback of these machine tools of known type, and in particular of the relevant protection elements, consists in the fact that these define a substantially polygonal perimeter made up of a series of rectilinear sections and do not therefore allow a good view of the inside areas arranged in correspondence to the corners defined by the protection elements themselves. The main aim of the present invention is to provide a machine for the manufacture of brooms, brushes and the like that allows the operator to easily and safely intervene on the workstations during their operation.

As part of such aim, one object of the present invention is therefore to facilitate the access of the operator to the workstation, so as to reduce as much as possible the physical stresses caused by a wrong work position (posture), at the same time guaranteeing and preserving the safety of the operator from direct interaction with the moving parts of the machine.

Another object of the present invention is to provide a machine for the manufacture of brooms, brushes and the like which allows the operator to easily intervene on the work areas, whatever their position.

Another object of the present invention is to provide a machine for the manufacture of brooms, brushes and the like that allows overcoming the mentioned drawbacks of the state of the art within the ambit of a simple, rational, easy and effective to use as well as low cost solution.

The above objects are achieved by the present machine for the manufacture of brooms, brushes and the like, comprising at least a workstation arranged resting on a supporting surface, at least a protection element positioned in correspondence to said workstation and which defines at least an internal part turned towards the workstation itself and at least an external part accessible by an operator, said protection element comprising at least a lower area arranged in proximity of said supporting surface and inclined in such a way as to converge towards said workstation moving closer to said supporting surface for allowing the operator to accommodate at least partially his/her lower limbs in the space defined below the lower area itself, characterised by the fact that said protection element comprises at least a through opening suitable for allowing the operator to access said workstation.

Other characteristics and advantages of the present invention will become more evident from the description of a preferred, but not sole, embodiment of a device for the protection of machine tools, particularly for machines for the manufacture of brooms, brushes and the like, illustrated purely as an example but not limited to the annexed drawings in which:

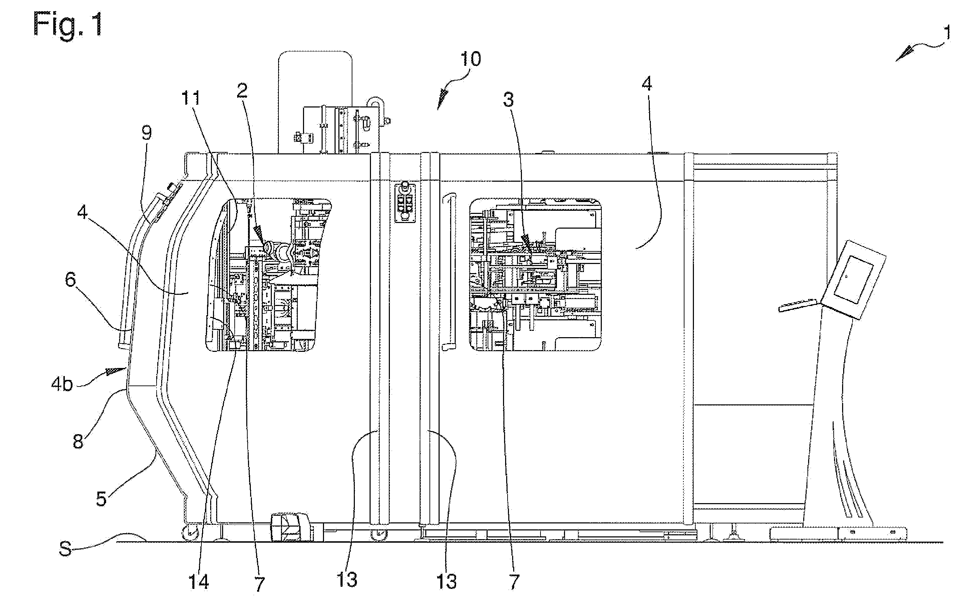

figure 1 is a side elevation view of the device according to the invention arranged in correspondence to a machine tool;
figure 2 is a top plan view of the device and of the machine tool of figure 1;

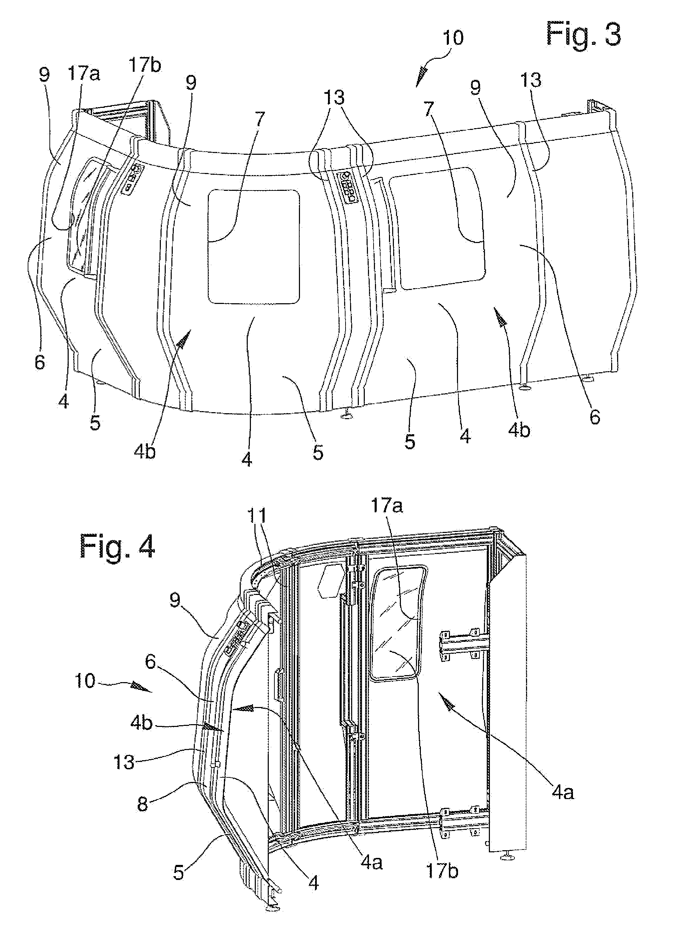

figure 3 is an axonometric view of the protection device according to the invention;
figure 4 is a side elevation view of the section of a protection element of the device of figure 3.

With particular reference to such figures, globally indicated by 1 is a machine for the manufacture of brooms, brushes and the like, as supporting elements having a plurality of bristles.

The machine 1 is arrange resting on a supporting surface S, made up e.g. of floor of a building, comprising at least a workstation 2,3.

By reference number 10 is indicated a device for the protection of the machine 1.

The device 10 comprises at least a protection element 4 arranged in correspondence to the workstation 2,3 and which defines at least an internal part 4a turned towards the workstation itself and at least an external part 4b accessible by an operator.

The external part 4b of the protection element 4 comprises at least a lower area 5, arranged in proximity of the supporting surface S, inclined and converging from the top downwards towards the workstation 2, 3, with inclination suitable for allowing the operator to accommodate at least partially his/her lower limbs in the space defined below the lower area itself.

The device 10 therefore comprises at least a protection element 4 arranged in correspondence to each workstation 2, 3.

The angle of inclination of the lower area 5 with respect to the vertical is below 90°, e.g., between 20° and 40°, preferably equal to around 30°.

Advantageously, the external part 4b also comprises an intermediate area 6 adjacent to the lower area 5 and inclined with respect to this to allow the operator's torso to move closer to the workstation 2,3.

Preferably, the surface defined by the lower area 5 and by the intermediate area 6, turned therefore towards the opposite side of the workstation 2,3, is substantially convex.

More in particular, the intermediate area 6 is inclined in such a way as to converge towards the workstation 2,3 moving away from the supporting surface S, i.e., from bottom to top.

In the embodiment shown in the illustrations, the angles of inclination of the lower area 5 and of the intermediate area 6 with respect to the vertical are different the one from the other.

The intermediate area 6 is in fact inclined with respect to the vertical by an angle between 0° and 20° and preferably equal to about 5°.

Advantageously, the joining area 8 between the lower area 5 and then intermediate area 6 is rounded so as to be more comfortable for the operator.

Preferably, the external part 4b of the protection element 4 also comprises at least an upper area 9 adjacent to the intermediate area 6 and inclined with respect to this.

The intermediate area 6 is therefore placed in between the lower area 5 and the upper area 9.

Suitably, the surface defined by the intermediate area 6 and by the upper area 9 and therefore turned towards the outside, is substantially convex.

More in particular, the upper area 9 is inclined so as to converge towards the workstation 2,3 moving away from the supporting surface S, i.e., from bottom to top.

The inclination of the upper area 9 is such as to allow the operator to approach the work area 2,3 with his/her head and provide him/her with a correct view of same.

In the embodiment shown in the illustrations, the angle of inclination of the upper area 9 with respect to the vertical is different from that of the intermediate area 6 and of the lower area 5.

According to the invention, the protection element 4 comprises at least a through opening 7 suitable for allowing the operator to access the workstation 2,3.

More in detail, the opening 7 is delimited by a closed profile.

Advantageously therefore the opening 7 is defined in correspondence to the work area 2,3.

Preferably, the opening 7 is defined in correspondence to at least one between the intermediate area 6 and the upper area 9.

In the embodiment shown in the illustrations, the opening 7 is defined partly on the intermediate area 6 and partly on the upper area 9.

In the embodiment shown in the illustrations, the machine 1 comprises a first workstation 2 for the insertion of at least a supporting element without bristles and for the extraction of at least a supporting element with bristles, a second workstation 3 for the insertion of the bristles inside the machine itself and a tool 12 for carrying out mechanical jobs,

More in particular, the first workstation 2 comprises a plurality of work areas 2a and is moving in rotation to selectively convey each of such work areas 2a in correspondence to the opening 7.

By the term "rotation" used in the present description in reference to the first workstation 2 is meant the movement made by same to change the work area 2a which is arranged in correspondence to the opening 7.

In the preferred embodiment shown in the illustrations, the first workstation 2 is suitable for supporting the bases of the brooms or of the brushes to be made and comprises three work areas 2a, on one of which the operator intervenes to position the bases to be worked and to remove the completed ones (with bristles), on another of which intervenes the tool 12 to make the holes on the bases themselves, and the last one interacts with the second station 3, which inserts the bristles in the holes made on the bases.

During the work phases, the first workstation 2 is not completely stopped, but perform micro-rotations around its own axis to allow the complete machining of the supported bases. During these micro-rotations, which cover a total arc of around 20-30°, the work area 2a that remains facing the opening 7 is always the same. These "micro-rotations" defined here must not therefore be confused with the above-mentioned rotation which causes the change of the work area 2a facing the opening 7.

Through the opening 7, the operator thus intervenes in a continuous way on the workstation 2a from time to time facing the opening itself to remove the completed bases and insert those to be machined.

Advantageously, the machine 1 comprises sensor means 14 arranged in proximity of at least one section of the edge delimiting the opening 7, operatively connected to the first workstation 2 and suitable for interrupting the rotation of the first workstation itself when these detect the presence of the operator.

More in particular, the sensor means 4 are of the optical type.

In the preferred embodiment shown in the illustrations, the sensor means 14 are arranged in correspondence to the internal part 4a of the protection element 4.

The sensor means 14 are opportunely enabled during the rotation of the first workstation 2, to prevent the operator being dragged by same, and are disabled when the first workstation 2 is substantially stopped in rotation, i.e., when the work area 2a facing the opening 7 is the same and the first workstation itself performs the above micro rotations.

Advantageously, the machine 1 comprises safety means 15 arranged inside the protection element 4, in proximity of the first workstation 2, and operatively connected to the first workstation 2. Such safety means 15 can be operated by contact by the operator.

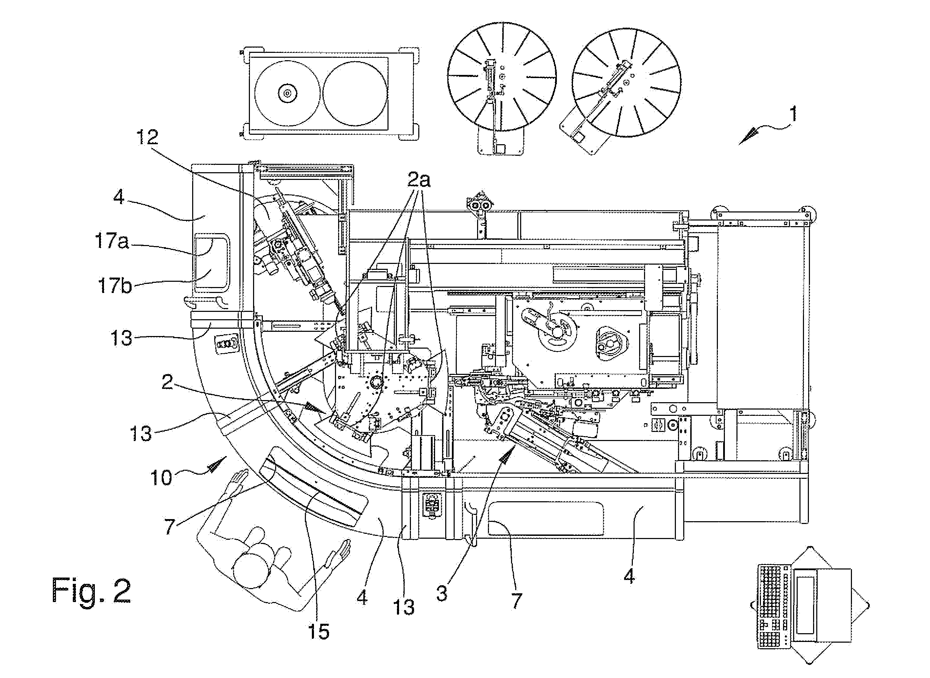

Preferably, the safety means 15 comprise at least a cable operatively connected to the first workstation 2 and which extends between two opposite edges of the relevant opening 7, in point of fact "cutting" the opening itself into two parts. In the preferred embodiment shown in figure 2, the cable 15 is arranged substantially horizontal and crosses the relative opening 7 in correspondence to its median area.

The protection element 4 then comprises at least one shaped recess 17a closed by a transparent wall 17b, e.g., arranged in correspondence to the tool 12, to allow visual access by the operator, in such a way as to control the progress of the machining operation.

The protection device 10 is suitably shaped so as to completely envelop the relative workstation 2,3 so as to therefore avoid any portion of the workstation itself from protruding outside the relative protection element 4.

Advantageously, at least a portion of the protection element 4 is substantially curvilinear and has a curvature produced by the revolution of its side profile around a substantially vertical axis.

More in detail, the protection element 4 is made by thermoforming.

Preferably, the device 10 comprises at least a stiffening rib 13 of the protection element 4.

More in particular, the device 10 comprises two stiffening ribs 13 distinct from the protection element 4 and associated integral with it in correspondence to its side extremities. The ribs 13 substantially extend along the entire vertical extension of the protection element 4, i.e., from the lower area 5 to the upper area 9.

The ribs 13 allow closing each protection element 4 at the side and at the same time stiffening it. Furthermore, the fact that such ribs 13 are formed separately with respect to the relative protection element 4 makes them easier to make and consequently cuts costs.

The device 10 suitably comprises a supporting frame 11 of the protection element 4, associated with the internal part 4a and arranged resting on the supporting surface S. The supporting frame 11 is therefore placed between the workstation 2,3 and the protection element 4.

Advantageously, the device 10 comprises a plurality of protection elements 4 positioned side by side the one to the other.

Preferably, the protection elements 4 arranged in correspondence to the second workstation 3 is associated sliding with the protection element 4 arranged by its side, in such a way that the operator can open it to directly access the second workstation itself.

It has in point of fact been ascertained how the described invention achieves the proposed objects and in particular the fact is underlined that the ergonomic shape of the protection element, and in particular of its external part, and the presence of at least a through opening allows the operator to be able to intervene on the relative workstation in an easy and convenient way. Furthermore, the presence of the sensor means and of the safety means associated with the opening defined on the protection element allow the operator to work in safety conditions.

The machine according to the invention thus allows considerably limiting the effort the operator has to make to perform the various work phases, consequently reducing the physical stresses which he/she has to undergo and thus preserving his/her physical integrity.

## Claims

1. Machine (1) for the manufacture of brooms, brushes and the like, comprising at least a workstation (2, 3) arranged resting on a supporting surface (S), at least a protection element (4) positioned in correspondence to said workstation (2, 3) and which defines at least an internal part (4a) turned towards the workstation itself and at least an external part (4b) accessible by an operator, said protection element (4) comprising at least a lower area (5) arranged in proximity of said supporting surface (S) and inclined in such a way as to converge towards said workstation (2, 3) moving closer to said supporting surface (S) for allowing the operator to accommodate at least partially his/her lower limbs in the space defined below the lower area itself, **characterised by** the fact that said protection element (4) comprises at least a through opening (7) defined in correspondence to said workstation (2, 3) and suitable for allowing the operator to access the workstation itself.

2. Machine (1) according to claim 1, **characterised by** the fact that it comprises a first workstation (2) which has a plurality of work areas (2a) and which moves in rotation to selectively convey each of said work areas (2a) in correspondence to said opening (7), and by the fact that it comprises sensor means (14) arranged in proximity of at least one section of the edge delimiting said opening (7), said sensor means (14) being operatively connected to said first workstation (2) and being suitable for interrupting said rotation of the first workstation itself when these detect the presence of the operator.

3. Machine (1) according to claim 2, **characterised by** the fact that said sensor means (14) are enabled during said rotation of the first workstation (2) and are disabled when said first workstation (2) is substantially stopped in rotation and the work area (2a) facing said opening (7) is the same.

4. Machine (1) according to claim 2 or 3, **characterised by** the fact that said first workstation (2) comprises at least a first work (2a) area for the positioning of one or more supporting bases to be worked and for the removal of one or more worked bases, at least a second work area (2a) for making holes on said bases and at least a third work area (2a) for the insertion of bristles in said base thus perforated.

5. Machine (1) according to one or more of the preceding claims, **characterised by** the fact that it comprises safety means (15) arranged inside said protection element (4), in proximity of said first workstation (2), and operatively connected to said first workstation (2), said safety means (15) being operated by contact by the operator to interrupt the rotation of the first workstation itself.

6. Machine (1) according to claim 5, **characterised by** the fact that said safety means (15) comprise at least a cable operatively connected to said first workstation (2) and which extends between two substantially opposite edges of said opening (7).

7. Machine (1) according to claim 6, **characterised by** the fact that said cable (15) is arranged substantially horizontal and crosses said opening (7) in correspondence to a median area of the opening itself.

8. Machine (1) according to one or more of the preceding claims, **characterised by** the fact that said external part (4b) has at least an intermediate area (6) adjacent to said lower area (5) and inclined with respect to this to allow the operator's torso to move closer to said workstation (2, 3).

9. Machine (1) according to one or more of the preceding claims, **characterised by** the fact that the surface defined by said lower area (5) and by said intermediate area (6) is substantially convex.

10. Machine (1) according to one or more of the preceding claims, **characterised by** the fact that the angle of inclination of said lower area (5) and of said intermediate area (6) with respect to the vertical are different the one from the other.

11. Machine (1) according to one or more of the preceding claims, **characterised by** the fact that said external part (4b) has at least an upper area (9) adjacent to said intermediate area (6) and inclined with respect to this.

12. Machine (1) according to one or more of the preceding claims, **characterised by** the fact that the surface defined by said intermediate area (6) and by said upper area (9) is substantially convex.

13. Machine (1) according to one or more of the preceding claims, **characterised by** the fact that said opening (7) is defined in correspondence to at least one between said intermediate area (6) and said upper area (9).

14. Machine (1) according to one or more of the preceding claims, **characterised by** the fact that at least a portion of said protection element (4) is substantially curvilinear and is built around a substantially vertical axis.

15. Machine (1) according to one or more of the preceding claims, **characterised by** the fact that said protection element (4) is made by thermoforming.
